# EUROPÄISCHE PATENTANMELDUNG

(11) **EP 2 490 160 A1**
(43) Veröffentlichungstag der Anmeldung: **22.08.2012**
(21) Anmeldenummer: 11154675.0
(22) Anmeldetag: 16.02.2011
(51) Int. Cl.: G06Q 10/00, G06Q 30/00

(54) **Wareninformationssystem**

(71) Anmelder: xplace GmbH, 37079 Göttingen (DE)
(72) Erfinder: Brinkmann, Florian, 40670 Meerbusch (DE)
(74) Vertreter: Rehberg Hüppe + Partner

(57) **Zusammenfassung**

Die Erfindung betrifft ein Wareninformationssystem (3) für mindestens ein Warenhaus (20a, 20b). Insbesondere findet das Wareninformationssystem (3) Einsatz für einen Baumarkt oder eine Baumarkt-Kette.

Erfindungsgemäß kann ein Kunde nicht nur in einer ersten interaktiven Betriebsweise des Informations-Terminals (1) bei entsprechender Menüführung Informationen zu dem Warenhaus und zu Waren (beispielsweise zu einem Standort, zu einem Preis, zu einer Verfügbarkeit) aus einer Datenbank 21 abrufen. Erfindungsgemäß kann der Kunde optional auch über das Informations-Terminal (1) Kontakt zu einem Berater an einem Beratungs-Terminal (2) aufnehmen. Hierbei ist das Beratungs-Terminal (2) beabstandet von dem Informations-Terminal (1) angeordnet. Der Berater an dem Beratungs-Terminal (2) kann den Kunden umfassend beraten, ohne dass der Berater in der Nähe des Informations-Terminals (1) sein muss. Eine Kommunikationsverbindung zwischen dem Informations-Terminal (1) und dem Beratungs-Terminal (2) für diese zweite Betriebsweise kann beispielsweise eine Sprechverbindung und/oder die Übertragung eines Bild- oder Kamerasignals zwischen dem Informations-Terminal (1) und dem Beratungs-Terminal (2) sein.

## Beschreibung

### TECHNISCHES GEBIET DER ERFINDUNG

Die Erfindung betrifft ein Wareninformationssystem für mindestens ein Warenhaus. Im Folgenden wird die Erfindung am Beispiel eines Warenhauses in Form eines Baumarktes oder anhand einer Baumarkt-Kette erläutert, wobei diese Beispiele keine Einschränkung der Erfindung auf derartige Warenhäuser oder Warenhaus-Ketten darstellen soll.

### STAND DER TECHNIK

Baumärkte zeichnen sich häufig dadurch aus, dass, insbesondere angesichts der Produktvielfalt und der Produktkomplexität und des für die Auswahl des richtigen Produkts erforderlichen Fachwissens für Endkunden, das Identifizieren und Lokalisieren des für den Kunden relevanten Produkts kompliziert ist. Aus diesem Grund sind Kunden oftmals bestrebt, Beratung durch Beratungspersonal in Anspruch zu nehmen. Die Kosten für derartiges Beratungspersonal stellen aber einen wesentlichen Faktor für den wirtschaftlichen Erfolg von Baumärkten dar. Aufgrund der geringen Margen sowie der heterogenen Auslastung ist es nicht möglich, dem Kunden genügend Beratungspersonal zur Verfügung zu stellen. Als Folge ist das Beratungspersonal für den Kunden in dem großräumigen Baumarkt nur schwer zu finden, und/oder angetroffenes Beratungspersonal ist bereits mit anderen Kunden belegt, so dass unangemessene Wartezeiten auftreten, welche die Kundenzufriedenheit beeinträchtigen. Aufgrund der fehlenden Verfügbarkeit von Beratungspersonal eilt den Baumärkten der Ruf einer "Servicewüste" voraus.

### AUFGABE DER ERFINDUNG

Der Erfindung liegt die Aufgabe zugrunde, ein Wareninformationssystem für mindestens ein Warenhaus, insbesondere einen Baumarkt oder eine Baumarkt-Kette, vorzuschlagen, welches eine verbesserte Unterstützung der Kunden gewährleistet.

### LÖSUNG

Die Aufgabe der Erfindung wird erfindungsgemäß mit einem Wareninformationssystem mit den Merkmalen des unabhängigen Patentanspruchs 1 gelöst. Weitere Ausgestaltungen einer derartigen Lösung ergeben sich entsprechend den abhängigen Patentansprüchen 2 bis 17.

### BESCHREIBUNG DER ERFINDUNG

Erfindungsgemäß finden in dem Wareninformationssystem mindestens ein Informations-Terminal und eine Datenbank Einsatz. In der Datenbank sind Informationen zu in dem mindestens einen Warenhaus vertriebenen Waren gespeichert. Um lediglich einige Beispiele für derartige in der Datenbank gespeicherte Informationen zu nennen, kann es sich um Produktinformationen zu Eigenschaften der Ware, Hintergrundinformationen, Benutzungshinweise zu der Ware, mögliche alternative Waren, Informationen zum Warenstandort in einem Warenhaus, einen Warenpreis, einen Warenstandort und/oder Warenbestands- und Warenverfügbarkeitsinformationen handeln. Das Informations-Terminal und die Datenbank sind über ein Netzwerk miteinander verbunden. Auf mindestens einer Steuereinheit wird ein Steuerungsprogramm ausgeführt, mittels dessen ein Kunde an einem Informations-Terminal Informationen der Datenbank abrufen kann. Derartige interaktive Informations-Terminals sind an sich bekannt. Um lediglich ein mögliches Beispiel der Vielzahl bekannter Ausgestaltungen zu nennen, kann der Kunde über eine Tastatur oder einen Touch-Screen menügesteuert Informationen aus der Datenbank abrufen. Im einfachsten Beispiel wählt der Kunde über die Tastatur oder den Touch-Screen einen Produktbereich oder ein Produktschlagwort aus, womit dann entsprechende Informationen aus der Datenbank abgerufen und dem Kunden angezeigt werden. Der Kunde kann dann, vorzugsweise ebenfalls menügesteuert, alternative Suchen ausführen oder die Suche weiter spezifizieren oder bereitgestellte Informationen der Datenbank weiterverfolgen.

Erfindungsgemäß ist beabstandet von dem mindestens einen Informations-Terminal ein Beratungs-Terminal angeordnet. Das Informations-Terminal und das Beratungs-Terminal verfügen über jeweils eine Kommunikations-Einheit, die gleich oder unterschiedlich je nach den Anforderungen ausgebildet sein können. Bei der Kommunikations-Einheit kann es sich insbesondere um eine Kamera, einen Lautsprecher, einen Bildschirm, einen Kopfhörer und/oder ein Mikrofon handeln. Neben der oben erläuterten Verbindung des Informations-Terminal mit der Datenbank über das Netzwerk gewährleistet das Netzwerk auch eine Verbindung der Kommunikations-Einheit des Informations-Terminals mit der Kommunikations-Einheit des Beratungs-Terminals, so dass das Netzwerk eine zusätzliche Funktion übernehmen kann.

Auch das oben genannte Steuerungsprogramm erfüllt erfindungsgemäß neben der Ermöglichung des interaktiven Abrufens von Informationen durch den Kunden an dem Informations-Terminal eine zusätzliche Funktion. Diese besteht darin, dass ein Kunde an einem Informations-Terminal mit einem Berater an dem Beratungs-Terminal kommunizieren kann. Wünscht somit der Kunde alternativ oder zusätzlich zu dem interaktiven Abrufen von Informationen an dem Informations-Terminal eine ergänzende Beratung, muss dieser nicht einen Berater in dem Warenhaus suchen und sich damit von dem Informations-Terminal entfernen. Vielmehr kann der Kunde mit dem Berater über die Kommunikations-Einheiten in Kommunikation treten, was mittels einer optischen, hörbaren oder audio-visuellen Kommunikation erfolgen kann.

Neben der vereinfachten Kontaktaufnahme zwischen Berater und Kunde kann erfindungsgemäß auch die Qualität der Kommunikation zwischen Kunde und Berater erhöht werden. Ein Berater, der in dem Warenhaus an beliebiger Stelle, beispielsweise im Bereich eines Regals, aufgesucht werden muss, hat u. U. nur begrenzt Informationsmaterial, nämlich zu Produkten aus seinem Umgebungs- oder Beratungsbereich, zur Verfügung. Hingegen kann der Berater an dem Beratungs-Terminal auf vollständiges und optimiertes Informationsmaterial zurückgreifen, wobei der Berater auch über das Netzwerk auf die Datenbank zurückgreifen kann. Ebenfalls möglich ist, dass durch das erfindungsgemäße Wareninformationssystem eine Professionalisierung der Beratung erfolgt, da beispielsweise für ein Warenhaus oder mehrere Warenhäuser ein spezialisierter Berater, der beispielsweise auch nur für einen Teil-Warenbereich des Warenhauses oder der Warenhaus-Kette zuständig sein kann, hier aber erweiterte Kenntnisse besitzt, möglich ist. Derart spezialisiertes Beratungspersonal kann beispielsweise ein erhöhtes Wissen über die Aufteilung oder Struktur einzelner Abteilungen oder Regalbereiche im betreffenden Warenhaus besitzen und andererseits fundierte fachliche Hintergrund-Kenntnisse, beispielsweise im Fall der Ausbildung des Warenhauses als Baumarkt Hintergrund-Kenntnisse im Handwerks- und Heimwerkerbereich, besitzen. Eingesetzt werden können geübte Verkäufer oder Berater mit einem breiten Wissen, so dass möglich ist, dass eine überwiegende Anzahl von Kundenanfragen spontan beantwortet werden kann.

Die erfindungsgemäße Ausgestaltung soll anhand eines einfachen, die Erfindung nicht beschränkenden Beispiels erläutert werden: Erfindungsgemäß können in einem Baumarkt mehrere Informations-Terminals an prominenten Stellen verteilt und installiert sein. Diese können für den Kunden als Informations- und Beratungsstelle gekennzeichnet sein. Bei Bedarf hinsichtlich einer individuellen Beratung betätigt der Kunde ein Betätigungsorgan, was beispielsweise durch Drücken eines Knopfes oder Betätigen einer Schaltfläche auf dem Touch-Screen erfolgen kann. Als Folge wird der Kunde mit einem Berater, beispielsweise einem Mitarbeiter aus einem Call-Center, welcher an einem Beratungs-Terminal sitzt, verbunden. Hierbei können Kunde und Berater infolge der Ausstattung der Terminals mit Mikrofonen und Lautsprechern und/oder Kopfhörern miteinander sprechen. Bei gleichzeitigem Einsatz der Kameras und der Bildschirme kann auch jeweils das Bild des Kunden und des Beraters an den Kommunikationspartner übertragen werden. Der Kunde kann dann sein Anliegen schildern. Der Berater aus dem Call-Center kann dann dem Kunden die gewünschten Informationen bereitstellen, was beispielsweise auf Basis der Datenbank, des Fachwissens des Beraters und/oder auf Basis eines Warenhausplans oder Standortplans erfolgen kann.

Während grundsätzlich beliebige Ausstattungen der Informations-Terminals und des Beratungs-Terminals möglich sind, schlägt die Erfindung in einer bevorzugten Ausgestaltung vor, dass mindestens ein Informations-Terminal und/oder mindestens ein Beratungs-Terminal einen Monitor, einen Touch-Monitor, eine CPU, eine Audio-Ausgabeeinheit, eine Audio-Eingabeeinheit, eine Schnittstelle zu dem Netzwerk und/oder ein optische Erfassungseinheit besitzt/besitzen.

Ebenfalls möglich ist, dass das Terminal eine visuelle Ausgabeeinheit besitzt. Um lediglich einige Beispiele zu nennen, kann der Monitor verwendet werden, um dem Kunden Informationen aus einem Warenwirtschaftssystem, der Datenbank, zu der Ware im engeren und weiteren Sinne, ggf. durch geeignete inhaltliche und optische Aufbereitung durch das Steuerungsprogramm, anzuzeigen. Möglich ist, dass der Bildschirm alternativ oder gleichzeitig das Bild des Kommunikationspartners, also des Kunden oder des Beraters, anzeigt. Durchaus möglich ist selbstverständlich, dass separate Monitore oder Monitor-Bereiche vorgesehen sind für die Ausgabe von Informationen einerseits und das ständige Bild des Beraters bzw. Kunden. Ein Touch-Monitor kann gleichzeitig zur Ausgabe von Informationen und/oder eines Bildes des Beraters oder Kunden dienen und der Übermittlung von Eingaben, Wünschen, Informationen und Abfragen durch den Kunden bzw. Berater. Die Steuereinheit oder CPU dient neben weiteren Tätigkeiten der Steuerung der Datenflüsse im weitesten Sinne und der Ermöglichung des Ablaufs des Steuerungsprogramms.

Bei einer erfindungsgemäß einsetzbaren Audio-Ausgabeeinheit handelt es sich beispielsweise um einen Lautsprecher oder einen Kopfhörer, während die erfindungsgemäß einsetzbare Audio-Eingabeeinheit ein Mikrofon in beliebiger Ausgestaltung sein kann. Möglich ist auch, dass die Audio-Ausgabeeinheit und die Audio-Eingabeeinheit in eine Art Telefonhörer oder "Headset" integriert sind. Um lediglich ein Beispiel für eine visuelle Ausgabeeinheit zu nennen, kann ein Drucker im Bereich des Terminals eingesetzt sein, mit welchem beispielsweise für den Kunden Wareninformationen, ein Standort der Ware und/oder ein Weg zum Auffinden der Ware in einem Regal ausgegeben werden können, so dass der Kunde diese Informationen in dem Baumarkt mitnehmen kann, beispielsweise um den relevanten Warenstandort zu finden, oder zwecks Dokumentation mit nach Hause nehmen kann. Die Schnittstelle des Terminals für das Netzwerk kann beliebig ausgebildet sein, insbesondere als drahtgebundene Schnittstelle oder als nicht drahtgebundene Schnittstelle, beispielsweise mit einem WLAN-Modul, wobei die grundsätzliche Ausgestaltung derartiger Schnittstellen dem Fachmann für Netzwerke bekannt sind. Vorzugsweise erfolgt über diese Schnittstelle die gesamte Kommunikation, also sowohl während der interaktiven Kommunikation des Kunden mit der Datenbank als auch während der Kommunikation zwischen Kunde und Berater. Eine optische Erfassungseinheit kann, um lediglich einige Beispiele zu nennen, als Barcode-Scanner ausgebildet sein, über welchen das Terminal beispielsweise ein mit einem Barcode gekennzeichnetes Produkt erkennt oder mittels dessen sich ein Kunde mit einer Kundenkarte identifizieren kann. Möglich ist auch, dass ein 2D-Scanner oder eine oder die Kamera Einsatz findet, um optisch ein von dem Kunden mitgebrachtes Produkt, für welches ein Austausch- oder Ersatz-Produkt zu beschaffen ist, zu erfassen und an den Berater übermittelt. Um lediglich eine weitere Möglichkeit zu nennen, kann über den Scanner ein Handy-Display erkannt werden. Wenn an diesem ein Gutschein angezeigt wird, kann dann mittels des Wareninformationssystems dieser Gutschein automatisiert verarbeitet werden, welcher dann eine Rabatt-Aktion oder Preisreduzierung an der Kasse auslösen kann. Möglich ist auch, dass eine als Drucker ausgebildete visuelle Ausgabeeinheit Rabatt-Coupons ausdruckt, welche beispielsweise in Abhängigkeit von der Wartezeit des Kunden ausgelöst und/oder hinsichtlich ihrer Höhe bemessen werden. Diese ausgedruckten Rabatt-Coupons kann dann der Kunde an der Kasse des Warenhauses einlösen. Bei der optischen Erfassungseinheit kann es sich alternativ oder ergänzend auch um einen Magnetstreifenleser handeln, mittels dessen alternativ zu einem Barcode eine Kundenkarte erfasst werden kann.

In weiterer Ausgestaltung der Erfindung beinhaltet das Steuerungsprogramm des Wareninformationssystems eine Warteschleifen-Routine. Diese Warteschleifen-Routine ermöglicht insbesondere die folgenden Funktionen:
- Aufbau der Kommunikationsverbindung zwischen Kunde und Berater, wenn ein Berater aktiv ist und nicht mit der Beratung eines anderen Kunden beschäftigt ist,
- Steuerung der Reihenfolge der Beratung von Kunden durch einen Berater, wenn mehrere Kunden eine Beratung wünschen,
- Steuerung der Zuordnung der Kunden zu einem passenden Berater,
- Information des Kunden über den Status der Warteschleife, beispielsweise mit Abschätzung der ungefähren Wartezeit und/oder Angabe der Zahl der Personen, die sich noch vor dem Kunden in der Warteschleife befinden und/oder
- Bereitstellung von hörbaren oder sichtbaren Zwischeninformationen, beispielsweise zu dem Warenhaus, zu Produkten, Angeboten, für den Kunden.

Möglich ist hierbei, dass die Warteschleifen-Routine sämtliche Anfragen von Kunden nach Beratung, beispielsweise an unterschiedlichen Informations-Terminals eines Warenhauses, einem einzigen Berater an einem Beratungs-Terminal zuweist. Ebenfalls möglich ist allerdings auch, dass das Steuerungsprogramm mit der Warteschleifen-Routine zunächst eine Zuweisung von Kunden zu mehreren Beratern an unterschiedlichen Beratungs-Terminals vornimmt, was nach Standort in dem Warenhaus, Standort des Warenhauses selbst, Warenhaus-Gruppe in einer Warenhaus-Kette, Art des Produktes, hinsichtlich dessen der Kunde Informationen wünscht, oder vorheriger Anfrage eines identifizierten und nun erneut anfragenden Kunden erfolgen kann.

In weiterer Ausgestaltung kann die Akzeptanz des Kunden für eine unter Umständen auftretende Wartezeit erhöht werden, wenn das Steuerungsprogramm eine Wartezeiterfassungs-Routine besitzt. Diese Wartezeiterfassungs-Routine löst in Abhängigkeit einer von einem Kunden erreichten, also während der aktuellen Anfrage aufgelaufenen Wartezeit und/oder in Abhängigkeit einer von einem Kunden über mehrere Anfragen kumulierten Wartezeit eine Aktion aus. Hierbei handelt es sich um eine für den Kunden vorteilhafte Aktion oder BonusAktion, die unbemerkt für den Kunden erfolgen kann, vorzugsweise aber dem Kunden zur Kenntnis gelangt. Um hier lediglich einige Beispiele der Vielzahl von Möglichkeiten zu nennen, kann je nach Wartezeit dem Kunden ein Rabatt-Coupon bereitgestellt werden, so dass beispielsweise je Minute Wartezeit ein Kunde einen Gutschein in Höhe von 50 Cent erhält. Möglich ist auch, dass bei einer erneuten Anfrage eines Kunden, welcher bei einer letzten Anfrage eine gewisse Wartezeit warten musste, die Aktion für den Kunden darin besteht, dass dieser in einer Warteschleifen-Routine vor anderen Kunden behandelt wird, deren Anfrage nach Beratung an sich früher erfolgt ist.

In weiterer Ausgestaltung des erfindungsgemäßen Wareninformationssystems berücksichtigt das Steuerungsprogramm, ob, wann, mit welchem Inhalt und/oder in welchem Umfang ein Kunde, der geeignet zu identifizieren ist, bereits zuvor Informationen an ein- und demselben Informations-Terminal oder an unterschiedlichen Informations-Terminals eingeholt hat. Um hier lediglich einige Beispiele zu nennen, kann eine Speicherung von Informationen im Umfeld der letzten Anfrage nach Beratung erfolgen. Bei einer erneuten Anfrage kann an dem Informations-Terminal und/oder an dem Beratungs-Terminal dann die gespeicherte Information angezeigt oder genutzt werden, so dass beispielsweise unmittelbar auf die vorherige Anfrage aufgesetzt werden kann. Oftmals liegt auch die Vermutung nahe, dass ein Kunde mit seinen Anfragen vorrangig Informationen zu einem spezifischen Warenbereich wünscht, so dass mit vorherigen Anfragen bereits Informationen zu diesem spezifischen Warenbereich vorliegen, was dann beispielsweise berücksichtigt werden kann, indem dem Kunden unmittelbar ein Berater zugewiesen wird, welcher sich in diesem spezifischen Warenbereich besonders gut auskennt. Ebenfalls kann bei wiederholten Anfragen eines Kunden ein persönlicher Kontakt zu einem von mehreren Beratern aufgebaut werden, indem dieser Kunde an dem Informations-Terminal dann immer wieder demselben Berater an einem Beratungs-Terminal durch das Steuerungsprogramm zugewiesen wird. Möglich ist auch, dass innerhalb eines vorgegebenen Zeitfensters, beispielsweise innerhalb von zehn Minuten, ein Kunde mit vorheriger Anfrage und einer innerhalb der genannten Zeitspanne aufgetretenen ergänzenden oder alternativen Anfrage vorrangig behandelt wird, so dass dieser dann nicht (nochmals) warten oder nur verkürzt warten muss. Umgekehrt kann natürlich auch ein Kunde, dem zuvor bereits eine Frage oder eine vorgegebene Zahl von Fragen beantwortet worden ist, mit niedrigerer Priorität behandelt werden. Ebenfalls möglich ist, dass gespeichert wird, wenn der Kunde eine Vorliebe für eine besondere Marke hat, so dass in der Kommunikation zwischen Kunde und Berater vorrangig auf diese Marke abgestellt werden kann. Hierbei kann eine Identifikation des Kunden über die Eingabe eines Namens, die Erfassung einer Kundenkarte o. ä. erfolgen. Ebenfalls möglich ist, dass der Standort eines genutzten Informations-Terminals verwendet wird mit der Vermutung, dass derselbe Kunde an demselben Informations-Terminal (innerhalb einer vorgegebenen Zeitspanne) tätig ist. Auch möglich ist, dass sich der Kunde über einen Benutzeraccount mit Kennwort identifiziert. Auch kann dem Kunden bei einer ersten Anfrage eine Kennnummer übermittelt werden, die am Bildschirm angezeigt werden kann, hörbar ausgegeben werden kann oder ausgedruckt wird. Über diese Kennnummer kann sich dann der Kunde für folgende Anfragen identifizieren, insbesondere durch Tastatureingabe, Erfassung eines Ausdrucks der Kennnummer über einen Scanner u. ä. Möglich ist auch, dass mit Aufnahme der Kommunikation zunächst eine automatisierte Abfrage erfolgt, ob dies die erste Kontaktaufnahme ist oder nicht. Möglich ist weiterhin, dass der Benutzer selber einen für einen Warenbereich zuständigen Berater anwählt oder sich der Berater in einem vorangegangenen Kundengespräch identifiziert hat mit Name oder einer Nummer, so dass der Kunde dann bei einer folgenden Anfrage gezielt diesen Berater wieder auswählen kann. Vorzugsweise wird mit Wiederaufnahme einer Beratungs-Kommunikation an dem Informations-Terminal und/oder dem Beratungs-Terminal ein am Ende der letzten Beratungs-Kommunikation mit demselben Kunden eingenommener Betriebszustand wieder erzeugt.

In weiterer Ausgestaltung der Erfindung berücksichtigt das Steuerungsprogramm ein vergangenes Kaufverhalten eines Kunden, wozu dieses mit dem Warenwirtschaftssystem und/oder einem Kassensystem verbunden sein kann, in welchem sich der Kunde für einen Kauf, beispielsweise über eine Kundenkarte, identifiziert. Möglich ist, dass die Kommunikation zwecks Beratung nur für Kunden mit einer Kundenkarte und/oder nur für Kunden mit einem Umsatz oberhalb eines Schwellwerts angeboten wird. Ebenfalls möglich ist, dass eine Berücksichtigung der Anfrage eines Kunden in der Warteschleifen-Routine in Abhängigkeit von dem Umsatz dieses Kunden erfolgt.

Möglich ist, dass die Beratung des Kunden durch Berater mit hohem Fachwissen erfolgt und/oder der Berater zur Beratung befähigt ist, da dieser besonders für die Anleitung der relevanten Informationen aus der auch dem Kunden zur Verfügung stehenden Datenbank geschult ist. In besonderer Ausgestaltung der Erfindung weist das Steuerungsprogramm des Wareninformationssystems allerdings eine Unterstützungs-Routine für den Berater an dem Berater-Terminal auf. Um hier lediglich eine Möglichkeit für die Ausgestaltung einer Unterstützungs-Routine zu nennen, können hier Fragestellungen von Kunden beispielsweise nach Häufigkeit der Fragestellung und/oder nach Warenbereich klassifiziert sein. Um lediglich ein weiteres Beispiel zu nennen, können Fragestellungen oder Informationen auch nach saisonalen Aspekten klassifiziert werden, so dass beispielsweise Informationen zu Frostschutzmitteln im Sommer nicht oder mit verminderter Priorität dem Berater angeboten werden. Möglich ist auch, dass eine Thesaurisierung von Produkt- und Suchschlagworten erfolgt, über welche dann dem Berater bekannte Antworten auf Fragestellungen zur Verfügung gestellt werden. Hierbei können mit Eingabe der einzelnen Suchschlagwörter oder auch einzelner Buchstabenfolgen bereits in "Echtzeit" dem Berater Unterstützungsangebote gemacht werden, deren Zahl sich mit Erhöhung der Zahl der eingegebenen Buchstaben und/oder Suchschlagwörter reduziert und aus denen dann der Berater gezielt auswählen kann. Ebenfalls möglich ist, dass die Unterstützungs-Routine für den Berater darin besteht, dass der Berater selbst Kontakt zu einem anderen Berater aufnehmen kann, wozu vorzugsweise die Kommunikations-Verbindung mit dem Kunden unterbrochen wird.

Für ein verbessertes Wareninformationssystem beinhaltet das Wareninformationssystem auch ein Warenwirtschaftssystem oder besitzt eine Schnittstelle zu dem Warenwirtschaftssystem. Hierdurch kann eine Erweiterung des für den Kunden bereitstellbaren Informationsspektrums erfolgen. Um lediglich einige Beispiele zu nennen, kann dem Kunden über das Warenwirtschaftssystem zur Information gebracht werden, wie viele der von ihm gewünschten Produkte in dem Warenhaus verfügbar sind, in welchem sich der Kunde befindet, oder dem Kunden kann ein Hinweis gegeben werden, in welchem anderen Warenhaus noch Produkte in welcher Anzahl verfügbar sind. Ebenfalls möglich ist, dass über das Warenwirtschaftssystem eine Information zur Verfügung gestellt wird, wann wieder mit einer Nachlieferung einer Ware zu rechnen ist. Schließlich können Informationen hinsichtlich des Preises aus dem Warenwirtschaftssystem abgeleitet werden.

Während grundsätzlich der Kunde seine Wünsche über an sich bekannte Schnittstellen an das Wareninformationssystem und den Berater übermitteln kann (insbesondere über die Tastatur, den Touch-Screen, menügesteuert und/oder über das Mikrofon), kann in weiterer Ausgestaltung das Steuerprogramm eine Produkterfassungs-Routine aufweisen, welche ein von dem Kunden mitgebrachtes Produkt an einem Informations-Terminal optisch erfasst und unter Umständen sogar bereits über eine Identifizierungs-Routine automatisiert identifiziert. Hat beispielsweise ein Kunde ein Ventil aus dem Leitungssystem seines Hauses ausgebaut, kann dieses über einen Scanner oder eine Kamera an dem Informations-Terminal optisch erfasst werden. Für die Auswertung eines derartigen Bildes gibt es dann unterschiedliche Möglichkeiten. Möglich ist, dass mittels der Produkterfassungs-Routine automatisiert die Ware erkannt wird, welche dem von dem Kunden mitgebrachten Produkt entspricht. Hierzu findet eine automatisierte Bilderkennung Einsatz, wie diese aus anderen Bereichen hinreichend bekannt ist und mittels welcher das erfasste, von dem Kunden mitgebrachte Produkt hinsichtlich charakteristischer Merkmale der in dem Baumarkt verfügbaren Waren untersucht wird. Alternativ oder zusätzlich, beispielsweise wenn die zuvor erläuterte Bilderkennung nicht möglich ist, kann das erfasste Bild des von dem Kunden mitgebrachten Produktes an den Berater an dem Beratungs-Terminal übermittelt werden, so dass dieser dann mit seiner Beratung auf das Bild des von dem Kunden mitgebrachten Produkts aufsetzen kann.

Grundsätzlich möglich ist, dass der Kunde selber den Aufbau einer Beratungs-Kommunikation aktiviert, wenn er dieses wünscht. In weiterer Ausgestaltung der Erfindung weist das Steuerungsprogramm allerdings eine Beratungsaktivierungs-Routine auf. Mittels der Beratungsaktivierungs-Routine wird automatisiert ein möglicher Beratungsbedarf erkannt. Um hier lediglich einige mögliche Ausgestaltungen der Vielzahl von Möglichkeiten zu nennen, kann ein möglicher Beratungsbedarf erkannt werden, wenn die Interaktion des Kunden mit dem Informations-Terminal auf das Ergebnis führt, dass in dem Warenhaus (scheinbar) keine von dem Kunden gewünschte Ware vorhanden ist, und/oder die Interaktion zum Ergebnis hat, dass eine übermäßige Zahl von Waren für den Kunden in Frage kommt. Ein möglicher Beratungsbedarf kann beispielsweise auch erkannt werden, wenn die Dauer, die der Kunde bereits das Informations-Terminal interaktiv bedient, eine Schwell-Zeitspanne überschreitet. Möglich ist natürlich auch, dass eine Kombination der zuvor erläuterten Kriterien miteinander zur automatischen Erkennung eines möglichen Beratungsbedarfs erfolgt. Wird anhand der Beratungsaktivierungs-Routine ein möglicher Beratungsbedarf automatisiert erkannt, kann dem Kunden der Aufbau der Kommunikation zwischen dem Informations-Terminal und dem Beratungs-Terminal angeboten werden in der Art der Erzeugung einer hörbaren oder sichtbaren Ausgabe: "Wünschen Sie eine Beratung durch einen Berater?" Dies kann der Kunde dann ggf. auf beliebige Weise bestätigen. Möglich ist allerdings auch, dass bei Erkennung eines möglichen Beratungsbedarfs automatisiert bereits die Kommunikation zur Beratung aufgebaut wird. Ebenfalls möglich ist, dass für einen erkannten Beratungsbedarf für eine erste Gruppe von Kriterien oder ein Ausmaß eines Beurteilungskriteriums, beispielsweise die Dauer der Bedienung des Informations-Terminals, die Kommunikation lediglich angeboten wird, während für einen anderen erkannten Beratungsbedarf oder andere Kriterien, beispielsweise Überschreiten eines zweiten Schwellwerts für die Zeitspanne der Bedienung des Informations-Terminals durch den Kunden, unmittelbar ohne weitere Abstimmung mit dem Kunden die Kommunikation mit dem Berater aufgebaut wird.

Durchaus möglich ist, dass die Interaktion des Kunden mit dem Informations-Terminal, die Interaktion des Beraters mit dem Beratungs-Terminal und die Kommunikation zwischen dem Kunden und dem Berater in drei nicht miteinander verbundenen, also in Informationsaustausch tretenden Teilsystemen erfolgt. Somit muss der Kunde auch nach vorheriger Interaktion mit dem Informations-Terminal sämtliche Informationen an den Berater über die Kommunikations-Verbindung zwischen Informations-Terminal und Beratungs-Terminal übermitteln. In weiterer Ausgestaltung der Erfindung werden über das Steuerungsprogramm von dem Kunden an dem Informations-Terminal eingegebene oder erzeugte Informationen an den Berater übermittelt. Dies kann bereits vor Herstellung der Kommunikationsverbindung erfolgen. Beispielsweise kann der Berater auf die Bildschirmausgabe an dem Informations-Terminal zugreifen, so dass sich der Berater ein schnelles Bild machen kann, welche Informationen für den Kunden von Interesse sind. Auch kann in diesem Fall der Berater bereits von dem Kunden genutzte Fragestellungen, Suchstrategien und Teilantworten nutzen, so dass das Beratungsgespräch unmittelbar an dem Punkt ansetzen kann, an dem der Kunde selber bei der Informationssuche gescheitert ist. Bei diesen zusätzlich zwischen Informations-Terminal und Berater übertragenen Informationen handelt es sich somit nicht (nur) um Übermittlung eines Bildes des Kunden, also insbesondere das von der Kamera aufgenommene Bild, oder die Stimme des Kunden, die über das Mikrofon aufgenommen wird, wobei natürlich mit Aufbau der Kommunikationsverbindung dann ergänzend diese Kommunikationsquelle genutzt wird.

Möglich ist, dass dann der Berater ausschließlich über die Kommunikationsverbindung mit dem Kunden kommuniziert. Eine verbesserte Information des Kunden und unter Umständen auch eine Verbesserung der nachfolgenden Kommunikation mit dem Kunden kann allerdings erfolgen, wenn der Berater über das Beratungs-Terminal eine Ausgabe an den Informations-Terminal, an welchem sich der Kunde gerade befindet, erzeugen oder beeinflussen kann. Um lediglich einige Beispiele zu nennen, kann der Berater an dem Bildschirm des Kunden die Produkte zur Anzeige bringen, welche für den Kunden in Frage kommen. Ebenfalls möglich ist, dass der Berater den Drucker des Informations-Terminals aktiviert, um beispielsweise Wareninformationen für den Kunden auszudrucken und/oder einen Standortplan mit einer Wegbeschreibung für den Kunden und/oder ein Identifizierungs-Kennzeichen für eine etwaige nachfolgende Zusatzfrage des Kunden auszudrucken. Erfahrungen aus Warenhäusern haben gezeigt, dass es der Kunde als optimale Beratung ansieht, wenn im Anschluss an ein Beratungsgespräch der Berater mit dem Kunden zu dem Standort einer Ware oder mehrerer alternativer Waren, auf welche sich das Beratungsgespräch bezogen hat, geht, um dann vor dem Regal oder Produkt eine ergänzende Beratung durchzuführen, beispielsweise charakteristische Merkmale der alternativen Waren zu erörtern. Ein derartiger Gang zur Ware kann mit dem erfindungsgemäßen Wareninformationssystem "virtuell" vollzogen werden, indem an dem Informations-Terminal durch den Berater auch eine Ausgabe erzeugt wird, welche in gewissem Sinne dem gemeinsamen Aufsuchen des Regals oder Warenbereichs entspricht, also beispielsweise die unterschiedlichen im entsprechenden Regal bevorrateten alternativen Waren auflistet mit Angabe von Zusatzinformationen oder Abbildung der Ware. Auf dieser Grundlage kann dann eine ergänzende Beratungskommunikation erfolgen.

Von Vorteil ist, wenn das Wareninformationssystem auch lernfähig ausgestaltet ist, indem das Steuerungsprogramm eine Auswerte-Routine besitzt. Mittels dieser Auswerte-Routine können Informationen zu der Gestaltung der Kommunikation zwischen Kunde und Berater, zu häufig gestellten Fragen, zu Vorlieben des oder der Kunden und ähnliches gesammelt werden. Möglich ist, dass die Auswerte-Routine automatisiert während der Kommunikation die an dem Informations-Terminal durch den Kunden und/oder dem Beratungs-Terminal durch den Berater vorgenommenen Aktionen auswertet. Ebenfalls möglich ist, dass nach Abschluss eines Beratungsgesprächs von dem Berater und/oder dem Kunden die Auswerte-Routine Fragen zu dem Beratungsgespräch erzeugt, deren Antworten dann gespeichert und ausgewertet werden. Ebenfalls möglich ist, dass über die Auswerte-Routine Vorlieben des Kunden für einzelne Waren, Warenbereiche, Hersteller, Qualitätsvorstellungen, Design-Stilrichtungen, Preisvorstellungen und das Kaufverhalten des Kunden gespeichert und ausgewertet werden. Um lediglich ein Beispiel zu nennen, kann über die Auswerte-Routine erkannt werden, dass ein Kunde vorrangig hochqualitative Produkte auch zu einem größeren Preis wünscht, so dass dann in einer anschließenden Beratungs-Kommunikation vorrangig Informationen zu hochqualitativen Produkten an dem Informations-Terminal zur Verfügung gestellt werden.

In weiterer Ausgestaltung der Erfindung besitzt das in dem Wareninformationssystem eingesetzte Steuerungsprogramm eine Warenbereichsdetektions-Routine, mittels welcher das Steuerprogramm ermittelt, hinsichtlich welchen Warenbereichs der Kunde eine Beratung wünscht. Die Warenbereichsdetektions-Routine kann hierbei beispielsweise den Kunden vor Aufbau der Kommunikationsverbindung mit dem Berater nach dem gewünschten Warenbereich fragen oder diesen durch eine die unterschiedlichen Warenbereiche in unterschiedlichen Ebenen abdeckende Baumstruktur leiten. Ebenfalls möglich ist, dass der relevante Warenbereich aus bisherigen Eingaben des Kunden an dem Informations-Terminal abgeleitet wird. In dem Steuerungsprogramm kann dann der detektierte Warenbereich genutzt werden, um den Kunden gezielt mit einem für diesen Warenbereich zuständigen Berater zu verbinden oder einen Berater vorab über den einschlägigen Warenbereich zu informieren, so dass letztendlich die erforderliche Kommunikationszeit zwischen Berater und Kunde reduziert und die Beratung verbessert wird.

Eine Vielzahl der Fragen der Kunden in einem Warenhaus ist darauf ausgerichtet, wo eine spezifische Ware in einem Warenhaus zu finden ist. Um diese Information bereitzustellen, ist es von Vorteil, wenn in der Datenbank Warenstandorte zu einem Warenhaus oder für mehrere Warenhäuser abgelegt sind. Erhöhte Bedeutung kommt dem Ablegen und Abrufen des Warenstandorts in der Datenbank zu, wenn für mehrere Warenhäuser ein Standort, beispielsweise ein zentrales Call-Center, zuständig ist und in den unterschiedlichen Warenhäusern ein- und dasselbe Produkt an unterschiedlichen Standorten oder in unterschiedlichen Regalen angeordnet sein kann. In diesem Fall kann die Datenbank für eine Ware jeweils für die unterschiedlichen zugeordneten Warenhäuser separat die Standorte beinhalten.

Weitere Beratungsapplikationen zur Identifikation von bestimmten Waren können ebenfalls in dem Wareninformationssystem vorhanden sein. Ebenfalls installiert sein können sogenannte Brand-Bereiche, in denen bestimmte Hersteller und Marken gesondert präsentiert werden. Ebenfalls denkbar ist die Integration von Kundenbindungssystemen. Insbesondere das Lesen von Kundenkarten sowie Rabatt-Aktionen in Form von Couponing (Rabatt-Coupons) lassen sich problemlos anbinden. Dies betrifft auch das Realisieren von Gewinnspielen inklusive einer automatisierten Versendung von E-Mails. Kunden können ihre Daten eingeben und so an Aktionen der jeweiligen Handelskette teilnehmen.

Möglich ist, dass das Beratungs-Terminal einen gegenüber dem Informations-Terminal erweiterten Funktionsumfang besitzt. Um hier lediglich ein einfaches Beispiel zu nennen, kann der Zugriff des Kunden über das Informations-Terminal auf die Datenbank und/oder das Warenwirtschaftssystem beschränkt sein, während der Berater an dem Beratungs-Terminal einen vollständigen oder erweiterten Zugriff auf das Datenbanksystem und das Warenwirtschaftssystem hat. Ebenfalls die unterstützende Software kann an dem Beratungs-Terminal Funktionen aufweisen, über welche das Informations-Terminal nicht verfügt.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt schematisch ein Informations-Terminal oder ein Beratungs-Terminal, wie dies Einsatz finden kann in einem erfindungsgemäßen Wareninformationssystem.
- **Fig. 2**: zeigt schematisch ein Wareninformationssystem eines einzigen Warenhauses.
- **Fig. 3**: zeigt schematisch ein Wareninformationssystem mit eine zentralen Beratung für zwei Warenhäuser.
- **Fig. 4**: zeigt einen schematischen Ablaufplan für ein Steuerungsprogramm des Wareninformationssystems.

### FIGURENBESCHREIBUNG

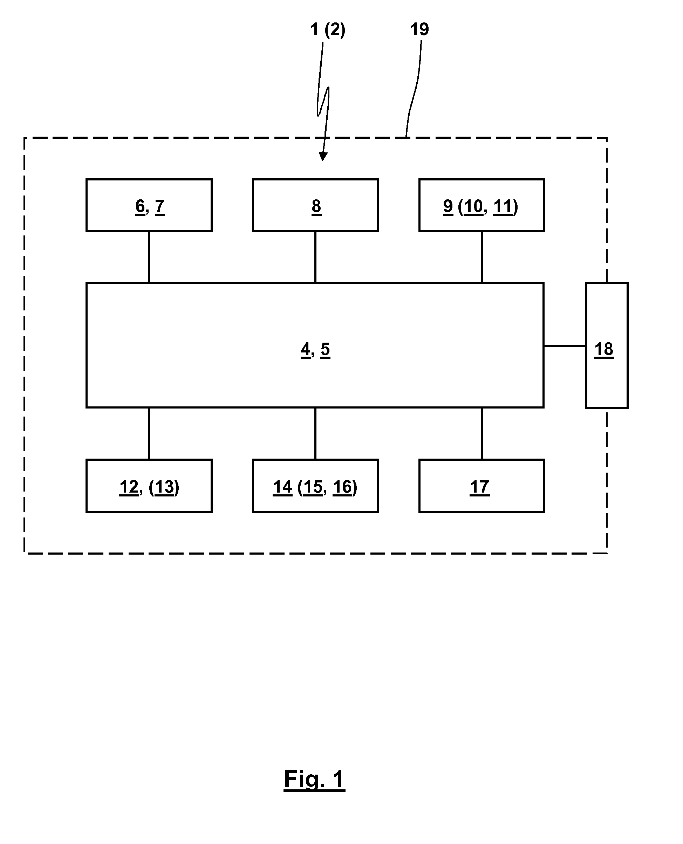

**Fig. 1** zeigt ein Informations-Terminal 1 oder ein Beratungs-Terminal 2, welches für den Einsatz in einem erfindungsgemäßen Wareninformationssystem 3 bestimmt ist. Das Informations- oder Beratungs-Terminal 1, 2 besitzt eine Steuereinheit 4 oder CPU mit hierauf ablaufendem Steuerungsprogramm 5. Die Steuerungseinheit 4 und das Steuerungsprogramm 5 wirken zusammen mit einem Monitor 6, einem Touch-Screen 7, einer Kamera 8, einer Audio-Ausgabeeinheit 9, insbesondere einem Lautsprecher 10 oder einem Kopfhörer 11, einer Audio-Eingabeeinheit 12, insbesondere einem Mikrofon 13, einer optischen Erfassungseinheit 14, insbesondere einem Scanner 15 oder Barcode-Scanner 16 oder einer weiteren Kamera zur Erfassung eines von dem Kunden mitgebrachten Produkts, einer Tastatur 17 und/oder mit einer Schnittstelle 18 zu einem Netzwerk, welche mit einem an sich bekannten Stecker oder eine WLAN-Sende- und Empfangseinheit ausgebildet sein kann. Die genannten Komponenten können als einzelne miteinander vernetzte Komponenten ausgebildet sein, die, wie in Fig. 1 schematisch dargestellt, über Point-to-Point-Verbindungen mit der Steuereinheit 4 verbunden sind, oder auch beliebig untereinander und mit der Steuereinheit 4 vernetzt sein. Hierbei ist es durchaus möglich, dass die Komponenten 6 bis 18 über eigene Steuereinheiten und/oder Steuerungsprogramme verfügen, welche mit der Steuereinheit 4 und dem Steuerungsprogramm 5 in Wechselwirkung stehen, insbesondere hinsichtlich eines Austausches von Daten und der Aktivierung von Prozessen. Vorzugsweise sind allerdings die Steuereinheit 4 und die Komponenten 6 bis 18 in einer gemeinsamen Baueinheit 19 zusammengefasst, welche über die Schnittstelle 18 mit weiteren Komponenten des Wareninformationssystems 3 in Wechselwirkung tritt. Möglich ist, dass die Baueinheit 19 modular aufgebaut ist, so dass insbesondere die Komponenten 6 bis 18 optional in dieser Baueinheit 16 vorhanden sein können.

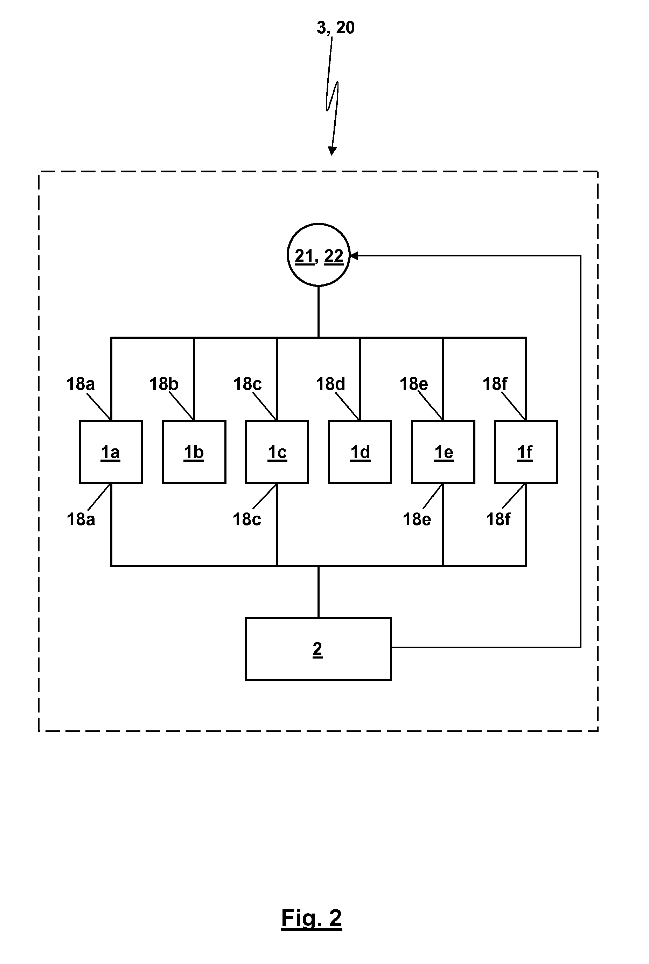

Fig. 2 zeigt ein Wareninformationssystem 3 für ein einziges Warenhaus 20, in welchem mehrere Informations-Terminal 1a bis 1f angeordnet sind. Das Wareninformationssystem 3 besitzt eine Datenbank 21, welche mit einem Warenwirtschaftssystem 22 ausgestattet oder verbunden sein kann. Hierbei kann die Datenbank 21 und das Warenwirtschaftssystem 22 einem einzigen Warenhaus oder mehreren Warenhäusern zugeordnet sein.

Ein Warenwirtschaftssystem dient der Erfassung der Warenströme in einem oder mehreren Warenhäusern. Die Software eines Warenwirtschaftssystems umfasst permanent und flüchtig gespeicherte Daten zu Beständen an Waren in dem mindestens einen Warenhaus. Für ein Warenwirtschaftssystem, welches einem einzigen Warenhaus zugeordnet ist, betreffen die Bestände dieses eine Warenhaus. Für den Fall, dass ein Warenwirtschaftssystem mehreren Warenhäusern zugeordnet ist, werden vorzugsweise die Bestände für die jeweiligen Warenhäuser einzeln geführt. Für eine Handelskette kann ein zentrales Warenwirtschaftssystem zum Einsatz kommen, welches aber dann die Bestände der einzelnen zugeordneten Handelsunternehmen und Standorte einzeln berücksichtigt. Die Bestände werden aktuell gehalten, indem die Übergabe von Waren an einen Käufer in einem Warenhaus aktuell in dem Warenwirtschaftssystem berücksichtigt wird. Beispielsweise kann eine übergebene Ware an der Kasse des Warenhauses erfasst werden. Kommuniziert die Kasse mit dem Warenwirtschaftssystem, kann mit dem Verkauf einer Ware in dem Warenhaus der Bestand in dem Warenhaus um die Zahl 1 in dem Warenwirtschaftssystem reduziert werden. Das Warenwirtschaftssystem kommuniziert beispielsweise mit einer Kassenschnittstelle, so dass die automatische Bestandsänderung bei einem Verkauf erfolgen kann. Möglich sind standardisierte Schnittstellen des Warenwirtschaftssystems, insbesondere Edifact, Datanorm, GAEB, DATEV, VDA, XML, CSV. Ein Warenwirtschaftssystem kann als offenes, geschlossenes und integriertes Warenwirtschaftssystem ausgebildet sein, wobei dieses insbesondere ein Wareneingangsmodul, ein Warenausgangsmodul, ein Dispositions- und Bestellwesenmodul, eine Ausgabe von Dispositionshilfen und Bestellvorschlägen, Bestellbeschreibungen und/oder Überwachungs- und Marketing-Management-Informationsmodule besitzen kann. Fehlen einzelne der vorgenannten Module, handelt es sich um ein offenes Warenwirtschaftssystem. Ein integriertes Warenwirtschaftssystem hingegen findet dann Anwendung, wenn alle obig genannten Module vorhanden sind und zusätzlich noch Verbindungen nach außen bestehen. Über das Warenwirtschaftssystem können Stamm- und Bewegungsdaten verwaltet werden. Hierbei sind Stammdaten die in Datensätzen verwalteten Objekte, vor allem Kunden, Lieferanten, Waren oder Produkte und Stücklisten. Bezogen auf diese werden die Bewegungsdaten, die verwalteten wirtschaftlichen Transaktionen in Form von Waren und Geld in eigenen Datensätzen erfasst. Unter einem Warenwirtschaftssystem im Rahmen der vorliegenden Erfindung wird auch ein sogenanntes "Enterprise Resource Planning-System" verstanden.

In der Datenbank 21 sind Informationen in weitestem Sinne zu Waren in dem Warenhaus 20 abgelegt, die über hier nicht dargestellte Maßnahmen aktualisiert werden. Um lediglich einige Beispiele zu nennen, kann es sich bei diesen Informationen über Hintergrundinformationen wie Zusammensetzungen, Bestandteile, technische Daten, Preis, Gewicht, Testberichte, Verfügbarkeit und etwaige Austauschware sowie einen Standort der Ware handeln.

In einer ersten Betriebsart des erfindungsgemäßen Wareninformationssystems 3 kann ein Kunde ein Informations-Terminal 1a bis 1f aufsuchen und hier Informationen aus der Datenbank 21 und/oder dem Warenwirtschaftssystem 22 abfragen, beispielsweise ein Produkt über Eingabe über die Tastatur 17, ein Mikrofon 13 mit einer entsprechenden Spracherkennung oder den Touch-Screen 7, unter Umständen mit einer entsprechenden Menü- und Benutzerführung, suchen und dann die der Ware zugeordneten Informationen aus der Datenbank 21 oder dem Warenwirtschaftssystem 22 abrufen, insbesondere einen Preis, einen Standort und die Verfügbarkeit der Ware. Diese Informationen können dann dem Kunden an dem Informations-Terminal 1 zur Kenntnis gebracht werden, insbesondere durch Ausgabe an den Monitor 6, den Touch-Screen 7 oder durch hörbare Ausgabe an den Lautsprecher 10 oder Kopfhörer 11 oder durch visuelle Ausgabe an einen Drucker.

Ergänzend kann für eine alternative oder zusätzliche zweite Betriebsweise eine Kommunikationsverbindung zwischen sämtlichen, gemäß Fig. 2 einzelnen Informations-Terminals 1a, 1c, 1e und 1f und einem Beratungs-Terminal 2 geschaffen werden, wozu ebenfalls die Schnittstellen 18a, 18c, 18e und 18f genutzt werden. Über diese Kommunikationsverbindung kann der Kunde an einem der Terminals 1a, 1c, 1e und 1f mit einem Berater an dem Beratungs-Terminal 2 kommunizieren, so dass dieser dem Kunden ergänzende Informationen bereitstellen kann und/oder diesen bei der interaktiven Suche an dem Informations-Terminal 1a bis 1f unterstützen kann.

Die Verbindung der Informations-Terminals 1a bis 1f mit der Datenbank 21, dem Warenwirtschaftssystem 22 und dem Beratungs-Terminal 2 erfolgt über unterschiedliche Netzwerke mit gleichen oder unterschiedlichen Datenübertragungsverfahren, wobei uni-direktionale oder bidirektionale Netzwerkleitungen eingesetzt werden können. Vorzugsweise findet aber für die Kommunikation der Informations-Terminals 1a bis 1f mit der Datenbank 21 und/oder dem Warenwirtschaftssystem 22 einerseits und dem Beratungs-Terminal 2 andererseits dasselbe Netzwerk Einsatz.

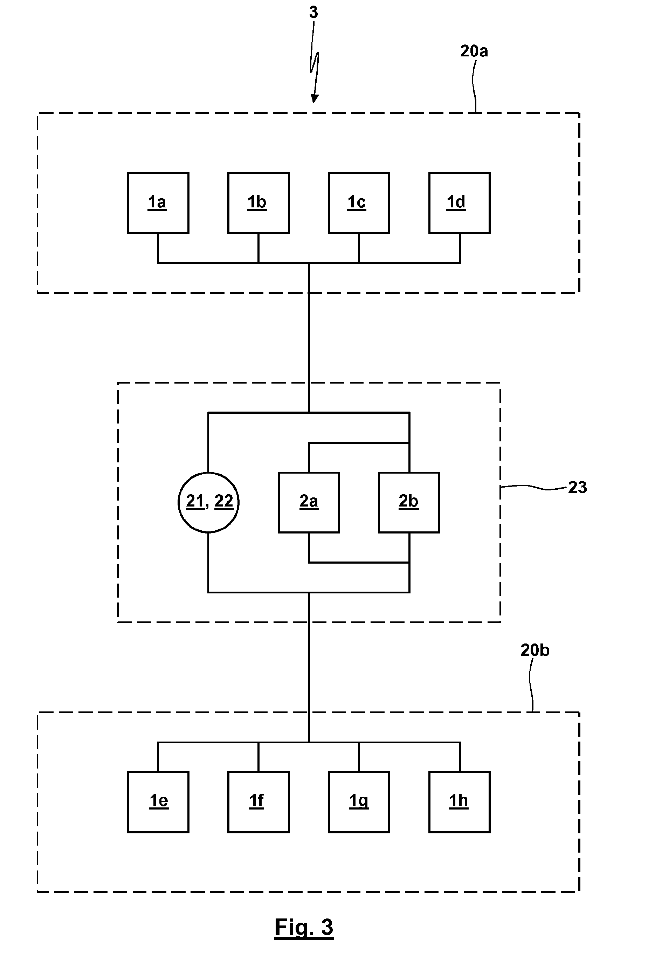

**Fig. 3** zeigt eine alternative Ausgestaltung eines Warenwirtschaftssystems 3, bei welcher zwei Warenhäuser 20a, 20b jeweils mit Informations-Terminals 1a bis 1d bzw. 1e bis 1h ausgestattet sind. Die beiden Warenhäuser 20a, 20b kommunizieren über ein Netzwerk mit einer Zentrale 23, in der für diese Ausgestaltung sowohl die Datenbank 21 und/oder das Warenwirtschaftssystem 22 als auch Beratungs-Terminals 2a, 2b, ..., beispielsweise in Form eines Call-Centers, vorhanden sind. Somit sind die Datenbank 21, das Warenwirtschaftssystem 22 und die Beratungs-Terminals 2a, 2b für die Informations-Terminals 1 in den beiden Warenhäusern 20a, 20b zuständig. Hierzu verfügt die Datenbank 21 und das Warenwirtschaftssystem 22 über die nach den einzelnen Warenhäusern 20a, 20b gesondert geführten Informationen wie Warenbestände, Standorte und/oder Preise u. ä.

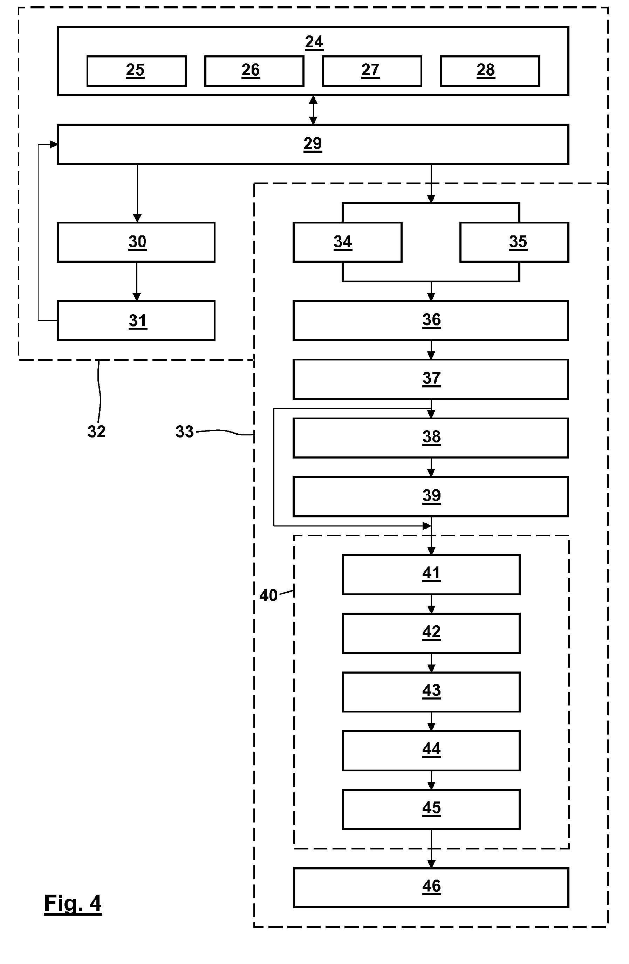

**Fig. 4** zeigt stark schematisch ein Struktogramm des Steuerungsprogramms 5 des Wareninformationssystems 3:

In einem Verfahrensschritt 24 erfolgt eine Übergabe von Informationen durch den Kunden an das Informations-Terminal 1 mit dem Ziel, die Wünsche oder Fragen des Kunden zu erfassen. Dies kann
- mit einem Verfahrensschritt 25 erfolgen, in dem mit einer Produkterfassungs-Routine, beispielsweise über eine Kamera oder einen Scanner, ein von dem Kunden mitgebrachtes Produkt optisch erfasst wird,
- in einem Verfahrensschritt 26 erfolgen, in dem der Kunde eine Tastatureingabe macht,
- in einem Verfahrensschritt 27 erfolgen, in dem der Kunde eine Eingabe an einem Touch-Screen macht und/oder
- mit einem Verfahrensschritt 28 erfolgen, in welchem der Kunde eine Spracheingabe in ein Mikrofon mit anschließender Spracherkennung machen kann.

Der Verfahrensschritt 24 kann iterativ und menügesteuert erfolgen, um die Übergabe der Informationen durch den Kunden an das Informations-Terminal 1 zu lenken. In einem anschließenden Verfahrensschritt 29 erfolgt eine Auswertung der von dem Kunden in dem Verfahrensschritt 24 übermittelten Informationen zur Spezifizierung der Anfrage. Ergibt die Auswertung in dem Verfahrensschritt 29, dass die von dem Kunden bereitgestellten Informationen noch nicht ausreichend sind, kann zu dem Verfahrensschritt 24 zurückgekehrt werden, um ergänzende Informationen abzufragen. Ist die Frage des Kunden hinreichend spezifiziert, erfolgt in einem Verfahrensschritt 30 die Abfrage von den gewünschten Informationen von der Datenbank 21 und/oder dem Warenwirtschaftssystem 22. In einem Verfahrensschritt 31 wird dann eine Ausgabe für den Kunden an dem Informations-Terminal 1 erzeugt, was beispielsweise durch Ausdruck, Bildschirmanzeige oder hörbare Ausgabe über den Lautsprecher oder den Kopfhörer erfolgen kann. Ist der Kunde mit dieser Information zufrieden, findet das Verfahren seinen Abschluss. Wünscht der Kunde ergänzende oder andere Informationen, kann das Verfahren zu den Verfahrensschritten 24, 29 zurückkehren und in interaktivem Betrieb der Wunsch des Kunden weiter spezifiziert werden mit dann wiederholter Abfrage von Daten aus der Datenbank 21 und dem Warenwirtschaftssystem 22 sowie Ausgabe in den Verfahrensschritten 30, 31. Die Ausführung der Verfahrensschritte 24, 29 bis 31 wird in der vorliegenden Patentanmeldung als "erste Betriebsweise" oder interaktive Betriebsweise 32 bezeichnet.

Ergänzend ermöglicht das erfindungsgemäße Wareninformationssystem 3 eine zweite Betriebsweise 33 oder beratergestützte Betriebsweise. Eine Initiierung dieser zweiten Betriebsweise 33 erfolgt in einem Verfahrensschritt 34, in dem der Kunde willkürlich an dem Informations-Terminal 1 eine Beratung anwählt, was durch einen entsprechenden Knopf oder Schalter, die Tastatur, ein entsprechendes Feld auf dem Touch-Screen o. ä. erfolgen kann. Alternativ kann in einem Verfahrensschritt 35 mittels einer Beratungsaktivierungs-Routine automatisiert ein möglicher Beratungsbedarf erkannt werden. Wie eingangs erwähnt kann dies beispielsweise durch die erfasste Zeitdauer der ersten Betriebsweise 32, die Zahl der ausgegebenen Waren zu einer Anfrage oder bei keinem Ergebnis zu einer Anfrage erfolgen. Gegebenenfalls wird in dem Verfahrensschritt 35 der Aufbau einer Beratungs-Kommunikation für den Kunden an dem Informations-Terminal 1 lediglich angeboten, so dass dies dann von dem Kunden entsprechend zu bestätigen ist.

Wird über den Verfahrensschritt 34 oder 35 das Erfordernis der Etablierung einer Beratungs-Kommunikation erkannt, erfolgt in einem Verfahrensschritt 36 ein Sammeln von Vorab-Informationen zu der erforderlichen Beratung. Hierzu kann beispielsweise automatisiert ermittelt werden, ob, wann, mit welchem Umfang und/oder mit welchem Inhalt der Kunde bereits zuvor Informationen an einem Informations-Terminal eingeholt hat. Ebenfalls können Informationen zu einem vergangenen Kaufverhalten eines Kunden aus einem Speicher oder der Datenbank abgerufen werden. Auch möglich ist, dass automatisiert Anfragen nach Informationen an das Informations-Terminal 1 und damit an den Kunden gesendet werden und diese Informationen dann über der Informations-Terminal 1 eingeholt werden. Ebenfalls kann eine Identifizierung des Kunden, beispielsweise über eine Kundenkarte, erfolgen.

Aus den in dem Verfahrensschritt 36 gewonnenen Informationen wird dann in einem Verfahrensschritt 37 eine Warenbereichsdetektions-Routine ausgeführt, um zu ermitteln, auf welchen Warenbereich das Interesse des Kunden ausgerichtet ist. Ist der Warenbereich detektiert, wird in dem Verfahrensschritt 37 dem Informations-Terminal 1, an welchem sich der Kunde befindet, ein Beratungs-Terminal 2 zugeordnet. Sind mehrere Beratungs-Terminals 2a, 2b in dem Wareninformationssystem 3 vorgesehen, die jeweils für unterschiedliche Warenbereiche zuständig sind, erfolgt eine Zuweisung zu dem zuständigen Beratungs-Terminal 2a oder 2b. Ist das zugeordnete Beratungs-Terminal 2a oder 2b gerade frei, kann unmittelbar die Kommunikationsverbindung mit dem Berater an dem Beratungs-Terminal 2a oder 2b aufgebaut werden. Ist dies nicht der Fall, läuft in dem Verfahrensschritt 38 eine Warteschleifen-Routine ab, in welcher der Kunde über das Informations-Terminal über den aktuellen Status in der Warteschleife und unter Umständen auch eine verbleibende geschätzte Zeit informiert wird. Ebenfalls möglich ist, dass in der Warteschleifen-Routine in dem Verfahrensschritt 38 dem Kunden zusätzliche Informationen, beispielsweise zu dem Warenhaus, zu Produkten, zu Sonderangeboten u. ä zwecks Überbrückung der Zeit angeboten werden. Optional kann mit Abschluss des Verfahrensschritts 38, also mit Ende der Warteschleife, in einem Verfahrensschritt 39 eine Wartezeiterfassungs-Routine ausgeführt werden, in welcher beispielsweise dem Kunden eine Bonusaktion gewährt wird in Abhängigkeit von der aufgelaufenen Wartezeit. Hieran anschließend wird die eigentliche Beratungs-Kommunikation 40 etabliert. Während der Beratungs-Kommunikation 40 geben Kunde und Berater jeweils Informationen in das Informations-Terminal 1 und das Beratungs-Terminal 2 ein, und diese oder hieraus erzeugte Informationen werden zwischen dem Beratungs-Terminal 2 und dem Informations-Terminal 1 ausgetauscht. Ein ergänzender Datenaustausch findet mit der Datenbank 21 und/oder dem Warenwirtschaftssystem 22 statt. In einem Verfahrensschritt 41 wird eine Unterstützungs-Routine für den Berater ausgeführt, um diesen bei seiner Beratungstätigkeit zu unterstützen, was durch Bereitstellung von Standard-Antworten auf häufig gestellte Fragen u. ä., siehe die eingangs aufgeführten weiteren Möglichkeiten, erfolgen kann.

In einem weiteren Verfahrensschritt 42 kann, veranlasst durch den Berater, eine ergänzende oder erstmalige Produkterfassungs-Routine ausgeführt werden, mittels welcher ein von dem Kunden mitgebrachtes Produkt optisch erfasst wird und dem Berater zur Kenntnis gebracht wird. Ebenfalls möglich ist, dass der Kunde eine Zeichnung vor eine Kamera hält oder einscannt, welche dann dem Berater zur Kenntnis gebracht werden kann.

In einem anschließenden Verfahrensschritt 43 kann dann eine weitere Spezifizierung der Anfrage des Kunden erfolgen, was auf Grundlage des Fachwissens des Beraters, durch Interaktion des Beraters mit dem Beratungs-Terminal 2, eine unterstützendes Steuerprogramm oder weitere Rückfrage an den Kunden über das Informations-Terminal 1 erfolgen kann.

Die gewünschte Information wird dann in dem Verfahrensschritt 44 abgerufen, insbesondere über Zugriff auf die Datenbank 21 und/oder das Warenwirtschaftssystem 22. Hieraus wird dann in dem Verfahrensschritt 45 eine geeignete Ausgabe an dem Informationsterminal 1 erzeugt. Es versteht sich, dass auch möglich ist, dass, beispielsweise bei entsprechender Fachkunde des Beraters, der Berater auch eine Ausgabe in dem Verfahrensschritt 45 erzeugt, ohne dass ein Zugriff auf die Datenbank 21 oder das Warenwirtschaftssystem 22 in dem Verfahrensschritt 44 erfolgt.

Hiermit findet die eigentliche Beratungs-Kommunikation 40 ihren Abschluss, wenn die mit der Ausgabe im Verfahrensschritt 45 für den Kunden bereitgestellten Informationen zufriedenstellend sind. Es versteht sich, dass ansonsten das Verfahren iterativ fortgeführt werden kann, um die Anfrage des Kunden weiter zu spezifizieren und/oder zusätzliche Anfragen zu beantworten.

Anschließend an die eigentliche Beratungs-Kommunikation 40 kann noch mit einem Verfahrensschritt 46 eine Auswerte-Routine ausgeführt werden, was durch den Berater und/oder den Kunden erfolgen kann, vgl. die auch eingangs aufgeführten weiteren Möglichkeiten zu der Auswerte-Routine.

Die zuvor genannten Verfahrensschritte werden durch das Steuerungsprogramm 5 auf der Steuereinheit 4 durchgeführt. Möglich ist durchaus, dass Teile des Steuerprogramms auf unterschiedlichen Steuereinheiten 4, die beispielsweise der Zentrale 23, einem Warenhaus 20a, 20b und/oder dem Informations-Terminal 1 oder dem Beratungs-Terminal 2 zugeordnet sind, ausgeführt werden.

Für eine besondere Ausgestaltung der Erfindung kann auch mindestens ein Informations-Terminal 1 oder Beratungs-Terminal 2 mit einem mobilen Endgerät mit Anschlussmöglichkeit an das Netzwerk, insbesondere ein PDA, Smartphone, Handy o. ä., gebildet sein, welches in das Netzwerk insbesondere über eine Telefonleitung oder ein drahtloses Netzwerk eingebunden sein kann. Möglich ist auch, dass das Informations-Terminal 1 mit dem mobilen Endgerät kommuniziert, so dass beispielsweise Eingaben des Kunden an das Informations-Terminal 1 übermittelt werden können und/oder Informationen von dem Informations-Terminal 1 an das mobile Endgerät übermittelt werden. Möglich ist weiterhin, dass das Beratungs-Terminal 2 einen Standort des mobilen Endgeräts automatisiert von dem mobilen Endgerät abfragt, welcher insbesondere über einen GPS-Sensor ermittelt wird. Der Standort kann dann ausgewertet werden, beispielsweise über eine Ermittlung des Warenbereichs, welcher sich in der Umgebung des mobilen Endgeräts befindet, oder über eine Ermittlung eines Warenhauses, in dem sich das mobile Endgerät gerade befindet oder welches in der Nähe des mobilen Endgerätes ist u. ä.

Eine Kommunikation des Kunden mit dem Informations-Terminal 1 kann auch über eine RFID-Schnittstelle, beispielsweise zur Übermittlung von Informationen zu einem Artikel, der mit einem RFID-Sender ausgestattet ist, an das Informations-Terminal 1, oder eine Bluetooth-Schnittstelle erfolgen.

Vorzugsweise erfolgt die Informationsübertragung in dem Netzwerk zumindest teilweise über Internet, Webservice und/oder MessageQueue.

### BEZUGSZEICHENLISTE

- 1: Informations-Terminal
- 2: Beratungs-Terminal
- 3: Wareninformationssystem
- 4: Steuereinheit
- 5: Steuerungsprogramm
- 6: Monitor
- 7: Touch-Screen
- 8: Kamera
- 9: Audio-Ausgabeeinheit
- 10: Lautsprecher
- 11: Kopfhörer
- 12: Audio-Eingabeeinheit
- 13: Mikrophon
- 14: optische Erfassungseinheit
- 15: Scanner
- 16: Barcode-Scanner
- 17: Tastatur
- 18: Schnittstelle
- 19: Baueinheit
- 20: Warenhaus
- 21: Datenbank
- 22: Warenwirtschaftssystem
- 23: Zentrale
- 24-31: Verfahrensschritt
- 32: erste Betriebsweise
- 33: zweite Betriebsweise
- 34-39: Verfahrensschritt
- 40: Beratungs-Kommunikation
- 41-46: Verfahrensschritt

## Patentansprüche

1. Wareninformationssystem (3) für mindestens ein Warenhaus (20), insbesondere einen Baumarkt oder eine Baumarkt-Kette,
a) mit mindestens einem Informations-Terminal (1),
b) mit einer Datenbank (21), in welcher Informationen zu in dem mindestens einen Warenhaus (20) vertriebenen Waren gespeichert sind,
c) mit einem Beratungs-Terminal (2), welches beabstandet von dem mindestens einen Informations-Terminal (1) angeordnet ist,
d) wobei zumindest ein Informations-Terminal (1) und das Beratungs-Terminal (2) über eine Kommunikations-Einheit verfügen,
e) wobei das mindestens eine eine Kommunikations-Einheit aufweisende Informations-Terminal (1), die Datenbank (21) und das eine Kommunikations-Einheit aufweisende Beratungs-Terminal (2) über ein Netzwerk miteinander verbunden sind, und
f) mit einem auf mindestens einer Steuereinheit (4) ausgeführten Steuerungsprogramm (5), mittels welchem
fa) ein Kunde an einem Informations-Terminal (1) Informationen der Datenbank (2) abrufen kann und
fb) ein Kunde an einem Informations-Terminal (1) mit einem Berater an einem Beratungs-Terminal (2) kommunizieren kann.

2. Wareninformationssystem (3) nach Anspruch 1, **dadurch gekennzeichnet, dass** mindestens ein Informations-Terminal (1) und/oder ein Beratungs-Terminal (2)
a) einen Monitor (6),
b) einen Touch-Screen (7),
c) eine Steuereinheit (4) oder CPU,
d) eine Audio-Ausgabeeinheit (9),
e) eine Audio-Eingabeeinheit (12),
f) visuelle Ausgabeeinheit,
g) eine Schnittstelle (18) für das Netzwerk,
h) eine Tastatur (17) und/oder
i) eine optische Erfassungseinheit (14) besitzt.

3. Wareninformationssystem (3) nach Anspruch 1 oder 2, **dadurch gekennzeichnet, dass** das Steuerungsprogramm (5) eine Warteschleifen-Routine beinhaltet.

4. Wareninformationssystem (3) nach Anspruch 3, **dadurch gekennzeichnet, dass** das Steuerungsprogramm (5) eine Wartezeiterfassungs-Routine besitzt, die in Abhängigkeit einer von einem Kunden erreichten oder kumulierten Wartezeit eine Aktion für den Kunden auslöst.

5. Wareninformationssystem (3) nach einem der vorhergehenden Ansprüche, **dadurch gekennzeichnet, dass** das Steuerungsprogramm (5) berücksichtigt, ob, wann, mit welchem Inhalt und/oder in welchem Umfang ein Kunde bereits zuvor Informationen an einem Informations-Terminal eingeholt hat.

6. Wareninformationssystem (3) nach einem der vorhergehenden Ansprüche, **dadurch gekennzeichnet, dass** das Steuerungsprogramm (5) ein vergangenes Kaufverhalten eines Kunden berücksichtigt.

7. Wareninformationssystem (3) nach einem der vorhergehenden Ansprüche, **dadurch gekennzeichnet, dass** das Steuerungsprogramm (5) eine Unterstützungs-Routine für den Berater an dem Berater-Terminal (2) aufweist.

8. Wareninformationssystem (3) nach einem der vorhergehenden Ansprüche, **dadurch gekennzeichnet, dass** das Wareninformationssystem (3) ein Warenwirtschaftssystem (22) beinhaltet oder eine Schnittstelle (18) zu einem Warenwirtschaftssystem (22) besitzt.

9. Wareninformationssystem (3) nach einem der vorhergehenden Ansprüche, **dadurch gekennzeichnet, dass** das Steuerungsprogramm (5) eine Produkterfassungs-Routine aufweist, welche ein von dem Kunden mitgebrachtes Produkt optisch an einem Informations-Terminal (1) erfasst.

10. Wareninformationssystem (3) nach einem der vorhergehenden Ansprüche, **dadurch gekennzeichnet, dass** das Steuerungsprogramm (5) eine Beratungsaktivierungs-Routine aufweist, mittels welcher automatisiert ein möglicher Beratungsbedarf erkannt wird und ein Kontakt zwischen dem Informations-Terminal (1) und dem Beratungs-Terminal (2) hergestellt oder angeboten wird.

11. Wareninformationssystem (3) nach einem der vorhergehenden Ansprüche, **dadurch gekennzeichnet, dass** von dem Kunden an dem Informations-Terminal (1) eingegebene und/oder erzeugte Informationen an das Beratungs-Terminal (2) übermittelt werden.

12. Wareninformationssystem (3) nach einem der vorhergehenden Ansprüche, **dadurch gekennzeichnet, dass** der Berater eine Ausgabe an einem Informations-Terminal (1) erzeugen und/oder beeinflussen kann.

13. Wareninformationssystem (3) nach einem der vorhergehenden Ansprüche, **dadurch gekennzeichnet, dass** der Berater gegenüber dem Kunden erweiterte Zugriffsrechte auf die Datenbank (21) und/oder ein Warenwirtschaftssystem (22) besitzt.

14. Wareninformationssystem (3) nach einem der vorhergehenden Ansprüche, **dadurch gekennzeichnet, dass** das Steuerungsprogramm (5) eine Auswerte-Routine besitzt.

15. Wareninformationssystem (3) nach einem der vorhergehenden Ansprüche, **dadurch gekennzeichnet, dass** das Steuerungsprogramm (5) eine Warenbereichsdetektions-Routine besitzt.

16. Wareninformationssystem (3) nach einem der vorhergehenden Ansprüche, **dadurch gekennzeichnet, dass** s in der Datenbank (21) oder dem Warenwirtschaftssystem (22) Warenstandorte zu einem Warenhaus (20) oder für mehrere Warenhäuser (20a, 20b) abgelegt sind.

17. Wareninformationssystem (3) nach einem der vorhergehenden Ansprüche, **dadurch gekennzeichnet, dass** das Beratungs-Terminal (2) einen gegenüber dem Informations-Terminal (1) erweiterten Funktionsumfang besitzt.
